# EUROPÄISCHE PATENTSCHRIFT

(11) **EP 0 855 372 B1**
(45) Veröffentlichungstag und Bekanntmachung des Hinweises auf die Patenterteilung: **19.03.2003**
(21) Anmeldenummer: 97121715.3
(22) Anmeldetag: 10.12.1997
(51) Int. Cl.: C03C 17/30, B05D 1/18

(54) **Verfahren zur Hydrophilierung von Glassubstraten und deren Verwendung**
Method for hydrophilising glass substrates and their use
Méthode de hydrophilisation de substrats en verre et leur application

(30) Priorität: 23.01.1997 DE 19702385
(43) Veröffentlichungstag der Anmeldung: 29.07.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: Amberg-Schwab, Sabine, Dr., 97250 Erlabrunn (DE); Schottner, Gerhard, Dr., 91560 Heilsbronn (DE); Schmidt-Ihn, Eberhard, Dr., 73733 Esslingen (DE); Voigt, Petra, 72631 Aichtal (DE)

(56) Entgegenhaltungen:
- WO-A-95/10523
- DE-A- 3 301 807
- J. KRON ET AL: "Functional Coatings on Glass using ORMOCER-systems" JOURNAL OF SOL-GEL SCIENCE AND TECHNOLOGY., Bd. 2, Nr. 1/2/3, 1994, DORDRECHT NL, Seiten 189-192, XP000463570
- PATENT ABSTRACTS OF JAPAN vol. 007, no. 167 (C-177), 22.Juli 1983 & JP 58 074540 A (NIHON BARUKAA KOGYO KK), 6.Mai 1983,
- PATENT ABSTRACTS OF JAPAN vol. 007, no. 185 (C-181), 13.August 1983 & JP 58 088145 A (NIHON BARUKAA KOGYO KK), 26.Mai 1983,
- PATENT ABSTRACTS OF JAPAN vol. 007, no. 185 (C-181), 13.August 1983 & JP 58 088146 A (NIHON BARUKAA KOGYO KK), 26.Mai 1983,
- PATENT ABSTRACTS OF JAPAN vol. 007, no. 185 (C-181), 13.August 1983 & JP 58 088147 A (NIHON BARUKAA KOGYO KK), 26.Mai 1983,
- PATENT ABSTRACTS OF JAPAN vol. 007, no. 242 (C-192), 27.Oktober 1983 & JP 58 130138 A (NIHON BARUKAA KOGYO KK), 3.August 1983,
- PATENT ABSTRACTS OF JAPAN vol. 007, no. 242 (C-192), 27.Oktober 1983 & JP 58 130140 A (NIHON BARUKAA KOGYO KK), 3.August 1983,
- PATENT ABSTRACTS OF JAPAN vol. 007, no. 281 (C-200), 15.Dezember 1983 & JP 58 161946 A (NIHON BARUKAA KOGYO KK), 26.September 1983,
- PATENT ABSTRACTS OF JAPAN vol. 008, no. 007 (C-204), 12.Januar 1984 & JP 58 176143 A (NIHON BARUKAA KOGYO KK), 15.Oktober 1983,
- PATENT ABSTRACTS OF JAPAN vol. 008, no. 007 (C-204), 12.Januar 1984 & JP 58 176144 A (NIHON BARUKAA KOGYO KK), 15.Oktober 1983,
- DATABASE WPI Section Ch, Week 9806 Derwent Publications Ltd., London, GB; Class A26, AN 98-058974 XP002063065 & JP 09 301 742 A (NISSAN MOTOR CO LTD) , 25.November 1997

## Beschreibung

Die Erfindung betrifft ein Verfahren zur Hydrophilierung von Glassubstraten. Hydrophilierte Glassubstrate können beispielsweise als Fahrzeug-Windschutzscheiben zur Verbesserung der Wischqualität eingesetzt werden.

Das Verhalten einer Glasoberfläche bei der Einwirkung von Schmutz, Regen usw. ist durch die Struktur der Oberfläche, insbesondere durch die dort befindlichen Molekülgruppen, vorgegeben. Glas besitzt inhärent eine gewisse Hydrophilie. Für diese Hydrophilie sind Si-OH-Gruppen an der Glasoberfläche verantwortlich. Diese Gruppen können Wasserstoffbrückenbindungen zu vielen polaren Agenzien wie z.B. Proteinen eingehen. Die Si-OH-Gruppen sind darüberhinaus auch chemischen Reaktionen, z.B. Polykondensationen, zugänglich. Deshalb können durch eine Beschichtung oder Modifizierung der Glasoberfläche die hydrophilen Eigenschaften von Glas verbessert werden. Zur Verstärkung und Stabilisierung der hydrophilen Eigenschaften von Glassubstraten sind eine Vielzahl von Verfahren bekannt.

Zur Verbesserung der Hydrophilie kann Glas auch mit hydrophilen Polymeren beschichtet werden. Solche Verfahren sind beispielsweise aus der US 4,465,738 oder der DE 35 31 031 bekannt.

Wie aus der US 4,152,165 und der GB 2,121,059 bekannt, können Glasoberflächen auch mit hydrophilen, kovalent an die Glasoberfläche gebundenen Verbindungen beschichtet werden. Bei diesem Konzept werden Lacke auf die Glasoberflächen appliziert, die einerseits chemische Bindungen mit der Glasoberfläche eingehen können, andererseits im ausgehärteten Zustand eine hydrophile Oberfläche generieren. Der Nachteil dieses Konzeptes ist die relativ geringe mechanische Belastbarkeit der Schichten. Die Behandlung von Glasoberflächen mit geeigneten Hydro-Philierungsmitteln wird außerdem in J. Kron et al., Jour. of Sol-Gel Sci. and Techn. 2, 189-192 (1994) abgehandelt. Wie aus der DE 42 37 921 bekannt ist, können siliziumhaltige Beschichtungen durch flammenpyrolytische Zersetzung siliziumorganischer Verbindungen auf Glas aufgebracht werden. Nachteilig bei dieser Beschichtung ist ebenfalls eine unzureichende Langzeitstabilität und mangelnde Abriebbeständigkeit.

Zusammenfassend läßt sich festhalten, daß sich die hydrophile Ausrüstung von Glas aufgrund einer unzureichenden Langzeitstabilität bislang nicht bewährt hat. Dadurch bildet sich im Laufe der Zeit ein hoher Streulichtanteil beim Naßwischbetrieb aus, wie er von unbeschichteten Glassubstraten unter Umweltbedingungen bekannt ist. Dies ist vor allem bei Kraftfahrzeug-Windschutzscheiben ein unerwünschter Effekt, da sich mit zunehmender Streulichtintensität die Sicht des Fahrers verschlechtert.

Der Erfindung liegt daher die Aufgabe zugrunde, ein Verfahren zur Hydrophilierung von Glassubstraten zu schaffen, welches die Erzielung einer guten Oberflächenhydrophilierung in Verbindung mit einer geringen Lichtstreuung bei hoher Langzeitstabilität gewährleistet.

Die erfindungsgemäße Lösung dieser Aufgabe erfolgt durch die Merkmale des Anspruchs 1. Vorteilhafte Ausgestaltungen und Weiterbildungen der Lösung ergeben sich aus den jeweiligen Unteransprüchen.

Erfindungsgemäß wird somit vorgeschlagen, eine Hydrophilierung der Glasoberfläche dadurch vorzunehmen, daß mindestens ein Silan mit mindestens einem hydrophilen, organischen Rest R' und mindestens einer freien OH und/oder OR-Gruppe so mit dem Glassubstrat in Reaktion gebracht wird, daß eine kovalente Anbindung an das Glassubstrat resultiert. Wesentlich beim Anmeldungsgegenstand ist, daß dabei der hydrophile Rest so ausgewählt wird, daß das behandelte Glassubstrat hinsichtlich Wasser einen Randwinkel von weniger als 22 ° aufweist. Auf Autoscheiben wird durch die Hydrophilierung eine flächige Benetzung der Wassertropfen erreicht. Tropfenkondensation oder -benetzung, die zu einer verminderten Durchsicht durch die Scheiben führen, können durch die Hydrophilierung vermieden werden.

Eine sich an der Glasoberfläche abspielende mögliche Reaktion läßt sich vereinfacht wie folgt darstellen:

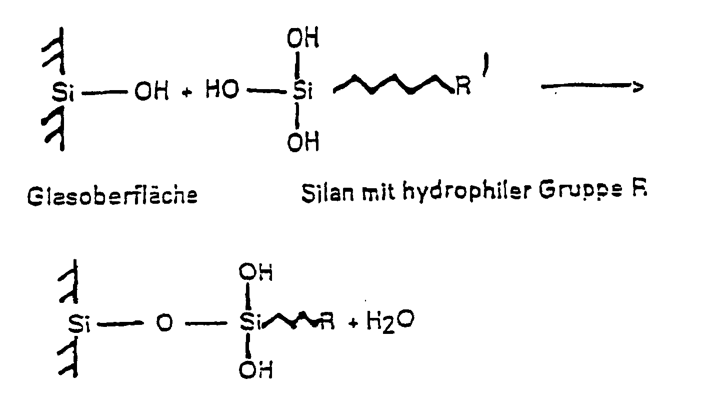

Das vorstehende Reaktionsschema zeigt einen möglichen Reaktionsablauf bei hydrophilen Silanen nach der Hydrolyse. Das erfindungsgemäße Verfahren ist aber auch mit teil- und nicht-hydrolysierten Silanen ausführbar.

Beim anmeldungsgemäßen Verfahren ist besonders hervorzuheben, daß auf der Glasoberfläche hydrophile Schichten von nur wenigen Moleküllagen entstehen. Der Vorteil ist darin zu sehen, daß die Grundeigenschaften des Trägers Glas, wie die hohe Transparenz, die Abriebbeständigkeit und die Witterungsbeständigkeit durch diese Oberflächenhydrophilierung nicht beeinträchtigt werden. Werden dickere Schichten als 5 µm aufgetragen, so müssen diese wieder so weit entfernt werden, daß nur wenige Moleküllagen auf der Scheibe erhalten bleiben.

Beim anmeldungsgemäßen Verfahren wird nun so vorgegangen, daß das ausgewählte Silan bevorzugt in einem Lösungsmittel gelöst wird und dann mittels an und für sich bekannter Verfahren, wie Walzen, Spritzen, Tauchen, Sprühen, Schleudern oder Streichen, auf das Glassubstrat aufgebracht wird. Das Verfahren wird dabei so geführt, daß eine Dicke von max. 5 µm auf dem Glassubstrat resultiert. Die Silane können dann nach dem Aufbringen noch durch eine Temperaturbehandlung, bevorzugt im Bereich zwischen 50 und 150 °C über eine Dauer von 5 bis 120 Minuten ausgehärtet werden.

Die hydrophilen Gruppen bei den verwendeten Silanen sind: Carboxylgruppen, Aminogruppen, Diaminogruppen, Nitrilgruppen, Hydroxylgruppen, Epoxygruppen, Acrylatgruppen, Mercaptogruppen, Isonitrilgruppen oder Sulfansäuregruppen. Ganz besonders bevorzugt ist es, wenn als Silan 3-Triethoxysilylpropyl)-Bernsteinsäureanhydrid und/oder N(2-Aminoethyl)3-Aminopropyltrimethoxysilan eingesetzt wird.

Es können auch Silane eingesetzt werden, bei denen die Aminogruppe durch Reaktion mit Säuren umgesetzt wird.

Beispiele für Silane, die eingesetzt werden können sind: (3-Triethoxisylyl)-Bernsteinsäureanhydrid, N(2-Aminoethyl)3-Aminopropyltrimethoxysilan oder Mischungen hiervon oder Reaktionsprodukte dieser Silane eingesetzt werden. Als geeignete Silane sind ferner die unter der Bezeichnung ORMOCERE bekannten Stoffgruppen zu nennen. Derartige Silane sind z.B. aus der DE OS 38 28 098 A1 zu ersehen.

Die Erfindung wird nachfolgend anhand eines Ausführungsbeispiels näher erläutert:

### Ausführungsbeispiel

Nachfolgend werden drei geeignete Varianten von erfindungsgemäßen Primerlösungen aufgeführt:
a) 20 Massen-% (3-Triethoxysilylpropyl)-Bernsteinsäureanhydrid in Essigester
b) 5 Massen-% (3-Triethoxysilylpropyl)-Bernsteinsäureanhydrid in Essigester
c) 5 Massen-% N-2-(Aminoethyl)-3-Aminopropyltrimethoxysilan in Essigester bzw. in Butanol

Die Silane können hydrolysiert, teilweise hydrolysiert bzw. auch nicht hydrolysiert eingesetzt werden. Die Aushärtung der aufgebrachten Schichten wird bei ungefähr 130°C über einen Zeitraum von 60 bis 120 Minuten durchgeführt. Durch diese Behandlung der Glassubstrate wird eine permanente Hydrophilierung erreicht.

Die durch das erfindungsgemäße Verfahren hergestellten Glasscheiben mit ausgehärteter hydrophilierender Schicht zeigen nach einer Einlaufphase in allen Fällen bei Aufgeben von Modellschmutz auf die beregnete und gewischte Scheibe (Wischertest) neben einer guten Ausgangs-Hydrophilie einen deutlich geringeren Streulichtanstieg als ihn unbeschichtete Scheiben aufweisen. Diese Eigenschaften blieben im Dauertestbetrieb erhalten. Die gute Ausgangshydrophilie der behandelten Scheiben läßt sich nach jeder Verschmutzung wieder reproduzieren.

An einem mit Variante c) behandelten Glassubstrat wird nach dem Wischertest eine AR-XPS-Analyse durchgeführt. Nach einer Sputterzeit von 5 Sekunden wird zunächst eine auf dem Glas befindliche Adsorptionsschicht abgetragen. Bei weiterem Sputtern können die Elemente Silizium, Kohlenstoff, Sauerstoff und Stickstoff nachgewiesen werden. Das Element Stickstoff kann dem Silan der aufgebrachten Schicht zugeordnet werden.

Es verbleibt also auch nach dem Wischen ein makroskopisch nicht sichtbarer, dünner Film des Beschichtungsmaterials auf dem Glassubstrat, der zu einer permanenten Hydrophilierung führt. Das Glassubstrat bleibt unter den genannten Testbedingungen des Wischertests bei Zugabe der verschiedenen Testmedien stabil. Die guten mechanischen und optischen Eigenschaften von Glas wurden durch das Verfahren nicht beeinträchtigt.

## Patentansprüche

1. Verfahren zur Hydrophilierung von Glassubstraten, **dadurch gekennzeichnet, daß**
zwischen einem Silan mit mindestens einem hydrophilen organischen Rest R' ausgewählt aus Carboxylgruppen, Ammoniumgruppen, Diaminogruppen, Nitrilgruppen, Hydroxylgruppen, Epoxygruppen, Acrylatgruppen, Mercaptogruppen, Isonitrilgruppen, Sulfonsäuregruppen, Säuregruppen oder Ammoniumgruppen sowie mindestens einer reaktiven, an das Siliciumatom gebundenen OH- und/oder OR-Gruppe auf der einen Seite und den Si-OH-Gruppen des Glassubstrates auf der anderen Seite kovalente Si-O-Si-Bindungen ausgebildet werden,
wobei das Silan in einem Lösungsmittel gelöst, durch Walzen, Spritzen, Sprühen, Schleudern oder Streichen auf das Glassubstrat aufgebracht und durch eine sich anschließende Temperaturbehandlung ausgehärtet wird, so daß die resultierende Schichtdicke nach dem Aushärten kleiner 5 µm ist und das derart behandelte Glassubstrat hinsichtlich Wasser einen Randwinkel von weniger als 22° aufweist.

2. Verfahren nach Anspruch 1,
**dadurch gekennzeichnet, daß** als Silan (3-Tri ethoxysilylpropyl)-Bernsteinsäureanhydrid, N(2-Aminoethyl)3-Aminopropyltrimethoxysilan oder Mischungen davon ausgewählt werden.

3. Verfahren nach einem der vorhergehenden Ansprüche,
**dadurch gekennzeichnet, daß** die Aushärtung in einem Temperaturbereich zwischen 50 und 150 °C für eine Dauer von 5 bis 120 Minuten durchgeführt wird.

4. Verwendung von hydrophilierten Glassubstraten nach einem der vorhergehenden Ansprüche im Kraftfahrzeugbereich.

## Claims

1. Method for hydrophilising glass substrates,
**characterised in that** covalent Si-O-Si bonds are formed between a silane with at least one hydrophilic organic residue R , selected from carboxyl groups, ammonium groups, diamino groups, nitrile groups, hydroxyl groups, epoxy groups, acrylate groups, mercapto groups, isonitrile groups, sulphonic acid groups, acid groups or ammonium groups and also at least one reactive OH- and/or OR group, which is bonded to the silicon atom, on the one hand, and the Si-OH groups of the glass substrate on the other hand,
the silane being dissolved in a solvent, being applied to the glass substrate by rolling, spraying, sprinkling, centrifuging or painting and being hardened by a subsequent temperature treatment so that the resulting layer thickness after hardening is less than 5 µm and the glass substrate treated in this manner has a contact angle of less than 22° with respect to water.

2. Method according to claim 1,
**characterised in that** (3-triethoxysilylpropyl)-succinic anhydride, N(2-aminoethyl)3-aminopropyltrimethoxysilane or mixtures thereof are selected as silane.

3. Method according to one of the preceding claims,
**characterised in that** the hardening is implemented in a temperature range between 50 and 150°C for a duration of 5 to 120 minutes.

4. Use of hydrophilised glass substrates according to one of the preceding claims in the automotive vehicle field.

## Revendications

1. Procédé d'hydrophilisation de substrats de verre
**caractérisé en ce que**
entre un silane avec au moins un radical organique hydrophile R' choisi parmi les groupes carboxyle, les groupes ammonium, les groupes diamino, les groupes nitriles, les groupes hydroxyles, les groupes époxydes, les groupes acrylates, les groupes mercapto, les groupes isonitriles, les groupes acides sulfoniques, les groupes acides ou les groupes ammonium ainsi qu'au moins un groupe OH et/ou OR réactif lié à l'atome de silicium, il se forme sur un côté et sur les groupes SiOH du substrat de verre de l'autre côté des liaisons Si-O-Si covalentes, le silane étant dissous dans un solvant par un procédé au rouleau, par projection, par pulvérisation, par essorage ou par enduction à la surface du verre et étant durci par un traitement thermique ultérieur, de manière que l'épaisseur de couche résultante après durcissement soit inférieure à 5 µm et que le substrat de verre ainsi traité présente par rapport à l'eau un angle de raccordement inférieur à 22°.

2. Procédé selon la revendication 1,
**caractérisé en ce qu'**
on choisit comme silane l'anhydride de l'acide 3-triéthoxysilylpropyl)-succinique, le N(2-aminoéthyl)3-aminopropyltriéthoxysilane ou leurs mélanges.

3. Procédé selon l'une des revendications précédentes,
**caractérisé en ce qu'**
on conduit le durcissement dans un intervalle de température compris entre 50 et 150°C pendant une durée allant de 5 à 120 minutes.

4. Utilisation de substrats de verre hydrophilisés selon l'une des revendications précédentes, dans le domaine des véhicules automobiles.
